# EUROPEAN PATENT SPECIFICATION

(11) **EP 1 074 367 B1**
(45) Date of publication and mention of the grant of the patent: **13.03.2013**
(21) Application number: 00116207.2
(22) Date of filing: 03.08.2000
(51) Int. Cl.: B29C 45/40, B29C 45/14, B29C 45/34, B29C 45/73

(54) **Apparatus for producing casting products molded in epoxy resin**
Vorrichtung zum Formgiessen von Epoxy-Harzartikeln
Dispositif de coulage d'article moulés en résine epoxy

(30) Priority: 03.08.1999 JP 22005099
(43) Date of publication of application: 07.02.2001
(73) Proprietor: Kabushiki Kaisha Toshiba, Kawasaki-shi, Kanagawa-ken 210-8572 (JP)
(72) Inventor: Makishima, Satoshi, Intellectual Property Division, Tokyo (JP); Ito, Yoshihiro, Intellectual Property Division, Tokyo (JP); Kometani, Fumihiro, Intellectual Property Division, Tokyo (JP); Yoshioka, Kanji, Intellectual Property Division, Tokyo (JP); Satou, Akira, Intellectual Property Division, Tokyo (JP)
(74) Representative: HOFFMANN EITLE

(56) References cited:
- WO-A-95/02494
- WO-A-99/10156
- US-A- 3 661 487

## Description

### CROSS REFERENCE TO RELATED APPLICATION

This application claims benefit of priority to Japanese Patent Application No. 11-220050 filed August 3, 1999, the entire content of which is incorporated by reference herein.

### BACKGROUND OF THE INVENTION

### FIELD OF THE INVENTION

This invention relates to an APG (Automatic Pressure Gelation) apparatus for producing casting products, molded in an epoxy resin, for high voltage apparatus that has a voltage of 6 kilo-volts or higher, which mass-produces the casting products in a short period of time. The casting product is, for example, a bushing, an insulation separator or the like, which are used for an electric power apparatus or a power reception and distribution apparatus of a gas insulated switchgear or the like, a resin molded coil or molded valve.

### DISCRIPTION OF THE BACKGROUND

An APG (Automatic Pressure Gelation) method is a method of producing a casting product made of an epoxy resin in a short period of time by hardening and forming the epoxy resin. In general, an APG apparatus that uses the APG method includes a pair of molds, a resin mixing tank connected to the molds through a pipe with a vacuum chamber, and an opening and closing system for opening and closing the pair of molds.

An epoxy resin possessing high reactivity, that is a resin that hardens in a short time, which contains silica powder or alumina powder, is used for molding. The epoxy resin is stirred and mixed with a hardening agent in the resin mixing tank while being degassed in a vacuum.

A metal conductor or an insert, which are pre-heated and dried, are set into the mold beforehand. After closing the molds in a vacuum chamber by the opening and closing system and then evacuating the vacuum chamber, the epoxy resin is injected into the molds from an inlet disposed on the bottom of the molds by applying pressure to the resin mixing tank.

After finishing injecting the epoxy resin into the molds, the epoxy resin is heated and hardened in a state of keeping the pressure to the epoxy resin applied from the resin mixing tank side at about 0.1-0.5 [MPa].

As to the APG method, a temperature of the epoxy resin before injection is normally held at a low temperature of 40-60 degrees C in order to ensure a pot life (usable time of the epoxy resin), while a temperature of the molds is held at a high temperature of higher than 120 degrees C in order to obtain casting products in a short period of time.

According to the above APG method, a large casting product made of a resin weighing more than 10 [kg] may be produced and released from a mold in an exceedingly short time (e.g. 20-60 minutes). The casting product released from the mold is transferred into a secondary curing oven until reaction of the epoxy resin settles and is hardened completely.

A crack resistant property, dimensional precision and a partial discharge property of the casting product are affected by deviation from set conditions of a temperature of the epoxy resin to be injected, pressure applying to the epoxy resin and an injecting speed of the epoxy resin, and a producing condition such as a hardening time or temperature balance of the mold. Concerning the above APG method, since the epoxy resin has high reactivity and heats up at hardening, there is the possibility of raising fraction defective.

Further, if hardening balance of the epoxy resin in the mold is disturbed, remaining stress of the casting product increases and gives rise to a contraction mark such as a depression or the like. As a result, crack resistant property and dimensional precision worsen due to the contraction mark or the like, and further electric characteristics such as a partial discharge property strikingly deteriorate due to a remaining void or a separation of the epoxy resin and the metal conductor caused by the remaining stress.

There is one approach to use a mold having a plurality of molding cavities for holding the epoxy resin and to produce a plurality of casting products simultaneously in order to increase productivity. This approach is only adopted to produce relatively small insulating products such as an insulator. In such case, a forked pipe for supplying and injecting a resin to the molding cavities is generally disposed outside of the mold, as, for example, it is in document WO99/10156.

However, there is a problem that it is difficult to control a temperature and a coefficient of viscosity of the resin existing in the forked pipe. As a result, since injecting time needed for supplying the resin to the molding cavities varies widely, deviations from set conditions of molding may not be disregarded. Accordingly, it is difficult to apply such casting product for high voltage apparatus having a voltage of 6 KV or higher.

On the other hand, there is a mold having a forked pipe formed inside thereof. Such mold is used for an injection molding method which uses a thermoplastic resin. In this case, since the thermoplastic resin remaining in the forked pipe is removed at every injection, there is a merit that it is easy to control balance of the injecting time for molding cavities. However, with respect to the APG method that uses a thermosetting resin, since the thermosetting resin exisiting in the forked pipe hardens fast, injecting paths leading to the molding cavities are blockaded first. As a result, a liquid resin to be injected is prevented from filling molding cavities, especially it is difficult for the liquid resin to fill a space created by a contraction of the injected epoxy resin, thereby impeding a normal operation of the APG apparatus.

Further, in case of molding a casting product formed in a complicated shape that integrates a metal conductor, a resin injection and hardening balance of the injected resin are especially critical matter. If the resin hardens at a low speed, it is hard to ensure satisfactory hardness of the casting product at a time of releasing the casting product. On the other hand, if the resin hardens at a high speed, the resin contracts in a state of being bound with a mold formed in a complicated shape. Therefore, a permanent set may be caused to the casting product. The permanent set of the casting product may cause a separation of a metal conductor and the resin, or an insert and the resin, which deteriorates a partial discharging property and causes cracks.

Especially, the above problem becomes more problematic with the increase of a heat-resisting property of the epoxy resin. That is, since a coefficient of contraction increases as the heat-resisting property rises, a processing control for molding becomes more difficult. Therefore, many problems remain of the above conventional molding method, in case of increasing productivity of the APG method that uses a thermosetting resin possessing a glass-transition temperature of 100 degrees C or higher. The glass transition temperature represents a heat-resisting property.

### SUMMARY OF THE INVENTION

Accordingly, one object of this invention is to provide an APG apparatus which may mold a plurality of casting products having a satisfactory crack resistant property, satisfactory dimensional precision and a satisfactory partial discharge property simultaneously.

The present invention provides an APG apparatus for producing a casting product made of a thermosetting resin by heating said thermosetting resin, including a pair of molds, at least one of said molds includes a plurality of molding cavities injected with the thermosetting resin, a forked path for leading the thermosetting resin to the molding cavities, and a cut configured to prevent heat from conducted to the forked path, and a heat plate configured to heat and mount the molds, whereby a plurality of casting products are produced simultaneously.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a front view showing a mold of an APG apparatus, mounted on one of a pair of heat plates;
FIG. 2 is a side view showing the pair of molds 2a and 2b mounted on the pair of heat plates 1a and 1b;
FIG. 3 is an enlarged sectional view of a metal conductor shown in FIG. 2;
FIG. 4 is a side view showing a first releasing device for releasing a casting product from a mold;
FIG. 5 is a a side view showing a second releasing device for releasing a casting product from a mold;
FIG. 6 is a front view showing a positioner having a tapered guide of a mold;
FIG. 7 is a front view showing two convex portions formed on the upper and lower sides of thin-walled portion of a flange of a casting product;
FIG. 8 is a side view showing a mechanical cylinder used for fixing magnet washers on a mold; and
FIG. 9 is a side view, partly in section, of the principle part of a fixing rod.

### DETAILED DESCRIPTION OF THE PREFERRED EMBODIMENT

An APG apparatus that produces three T-shaped bushings for the C-GIS (Cubicle-type Gas Insulated Switch gear) used in apparatus having a voltage of 22-77KV simultaneously is hereinafter described as a first embodiment of the present invention referring to drawings.

### (Basic structure of the APG apparatus)

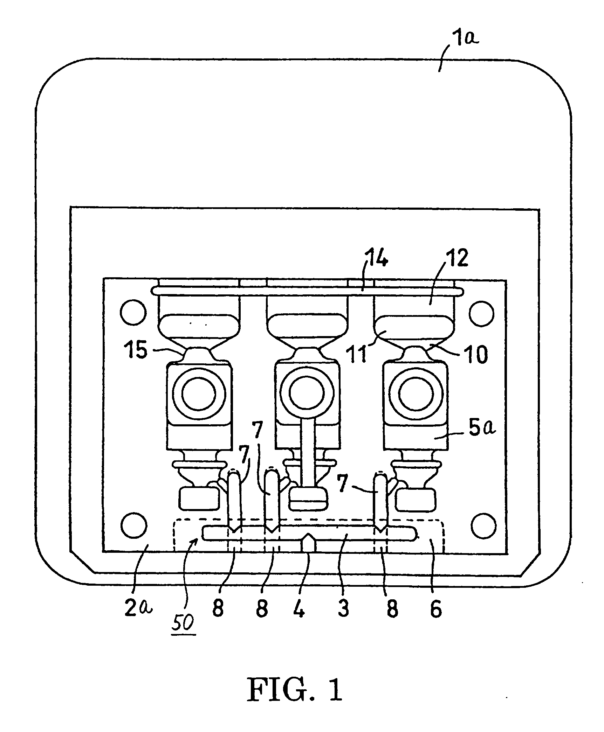

Basic structure of the APG apparatus of the first embodiment is explained referring to FIG. 1. FIG. 1 is a front view showing a mold of the APG apparatus, mounted on one of a pair of heat plates.

In the APG apparatus, a pair of molds 2a and 2b mounted on the pair of heat plates 1a and 1b capable of adjusting the temperature thereof are left-right symmetrical (only mold 2a is shown in FIG. 1). The respective molds 2a and 2b are moved by a hydraulic opening and closing device, and closed in a vacuum chamber.

In the APG apparatus shown in FIG. 1, a forked pipe 50 is formed inside of the mold 2a. The forked pipe 50 includes a main pipe 3 extending in a horizontal direction and having an inlet 4 at the center thereof, and three branch pipes 7 extending in a vertical direction and connecting the main pipe 3 with three molding cavities 5a of the mold 2a. After closing the molds 2a and 2b in the vacuum chamber and then evacuating the vacuum chamber, the epoxy resin is injected into the main pipe 3 through the inlet 4 disposed on the bottom of the molds 2a and 2b by applying pressure to a resin mixing tank. The epoxy resin is then divided into three and distributed to each of the molding cavities 5a by the branch pipes 7, thereby hardening the injected epoxy resin and producing three casting products simultaneously.

A bisphenol type of liquid epoxy resin, which possesses a glass-transition temperature of over 110 degrees C after hardening, is preheated and agitated in a vacuum with an acid anhydride hardening agent containing about 70 weight percentages of silica powder, and then injected.

According to the above APG apparatus, three T-shaped bushings for the C-GIS may be produced simultaneously. Therefore, the T-shaped bushing may be produced three times as fast as a conventional APG apparatus, and forty eight times as fast as a conventional molding apparatus.

### (Structure for preventing heat from conducted to the forked pipe 50)

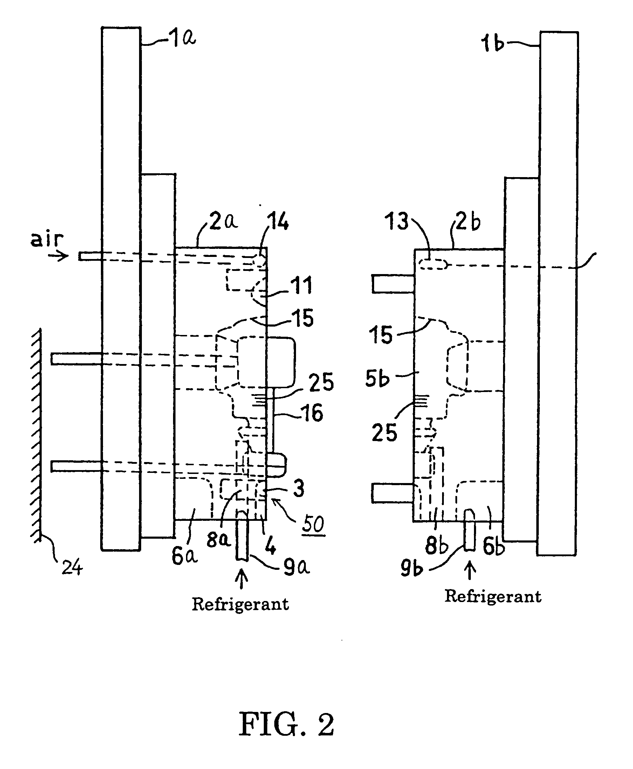

Structure for preventing heat from conducted to the forked pipe 50 is explained referring to FIGs. 1 and 2. FIG. 2 is a side view showing the pair of molds 2a and 2b mounted on the pair of heat plates 1a and 1b.

The molds 2a and 2b respectively include rectangular cooling grooves 6a and 6b that prevent heat transmitted from the heat plates 1a and 1b from conducted to the main pipe 3, and cooling pipes 8a and 8b along the branch pipes 7 that prevents heat transmitted from the heat plates 1a and 1b.

Although a satisfactory cooling effect may be achieved by merely forming the rectangular cooling grooves 6a and 6b and the cooling pipes 8a and 8b, cooling nozzles 9a and 9b running air are attached to the rectangular cooling grooves 6a and 6b and the cooling pipes 8a and 8b in order to increase cooling effect in this embodiment.

Further, cooling water may be used as a cooling material instead of air in order to increase cooling effect. In order to circulate the cooling water, for example, spiral pipes running cooling water are disposed in the rectangular cooling grooves 6a and 6b and the cooling pipes 8a and 8b.

As described above, since the main pipe 3 and the branch pipes 7 integrated in the mold 2a are refrigerated, hardening progress of the epoxy resin existing in the forked pipe 50 may be delayed. Accordingly, a system for supplying the epoxy resin existing in the forked pipe 50 to a space created by a contraction of the injected epoxy resin in the molds 2a and 2b may surely operate. Further, dimensional precision, mechanical property and electrical property of the casting product may be improved.

### (Structure of the forked pipe)

Structure of the forked pipe 50 is explained referring to FIG. 2.

The forked pipe 50 composed of the main pipe 3 and the branch pipes 7 is formed only in the mold 2a. A cross section of the forked pipe 50 is formed in a semicircle. The three branch pipes 7 have the same length to each other so that a distance between the main pipe 3 and the molding cavities 5a is made equal regardless of the number of molding cavities.

The number of processing steps for making the molds 2a and 2b is reduced, because the forked pipe 50 is formed only in the mold 2a. Further, the epoxy resin may be injected into the molding cavities 5a equally at the same time, since the three branch pipes 7 have the same length to each other. As described above, since the structure of the forked pipe 50 is made ideal, injection balance maybe improved and fraction defective may be reduced.

### (Degassing structure of molds)

Degassing structure disposed at the upper side of the molding cavities 5a is explained referring to FIG. 1.

Each of the molding cavities 5a has a first slit 10 disposed at the upper part thereof away from the inlet 4 and forming a first gap of 0.1-1.0 mm between the pair of molds 2a and 2b, for directing an outflow of the epoxy resin, a trap 11 disposed at the upper part of the first slit 10 and containing the outflow from the first slit 10, and a second slit 12 disposed at the upper part of the trap 11 and forming a second gap of 20-100 µm between the pair of molds 2a and 2b.

According to the above structure, efficiency in degassing the epoxy resin at a molding process and a sealing effect for the epoxy resin are ensured, thereby producing casting products having few void defects.

Further, as shown in FIGs. 1 and 2, a spot heater 13 or an air seal 14 capable of expanding by air pressure is disposed adjacent to the second slit 12. It is enough that only one of the spot heater 13 and the air seal 14 is used, although both of them are shown in FIG. 2.

In case of installing the spot heater 13, the spot heater 13 prevents an outflow of the epoxy resin from the second slit 12 at a time of pressing and hardening process by assisting to harden the epoxy resin in the second slit 12. In case of installing the air seal 14, the air seal 14 prevents an outflow of the epoxy resin from the second slit 12 at a time of pressing and hardening process by sealing a gap of the second slit 12.

Furthermore, as shown in FIGs. 1 and 2, a slope 15 is formed in each of the molding cavities 5a so that any surfaces of the molding cavity 5a contacting with the first slit 10 incline toward the first slit 10 at an angle of more than 10 degrees.

Accordingly, bubbles in the epoxy resin are collected by the slopes 15. As a result, efficiency in degassing the bubbles through the first slit 10 increases.

Moreover, the trap 11, disposed between the first slit 10 and the second slit 12, has a volume of 4-8% of the volume of a casting product produced by the molding cavities 5a and 5b.

Voids in the epoxy resin are surely removed by the above ideal structure of the trap 11 for holding the bubbles.

According to the above degassing structure, casting products having no void defects, no contraction marks (i.e. depressions) and no weld marks (i.e. traces of the flow of the epoxy resin) may be produced. As a result, casting products possessing a satisfactory partial discharge property may be produced.

Sealing structure for preventing the epoxy resin from sticking to electrical contact points of a built-in metal conductor of a casting product is explained referring to FIGs. 1, 2 and 3.

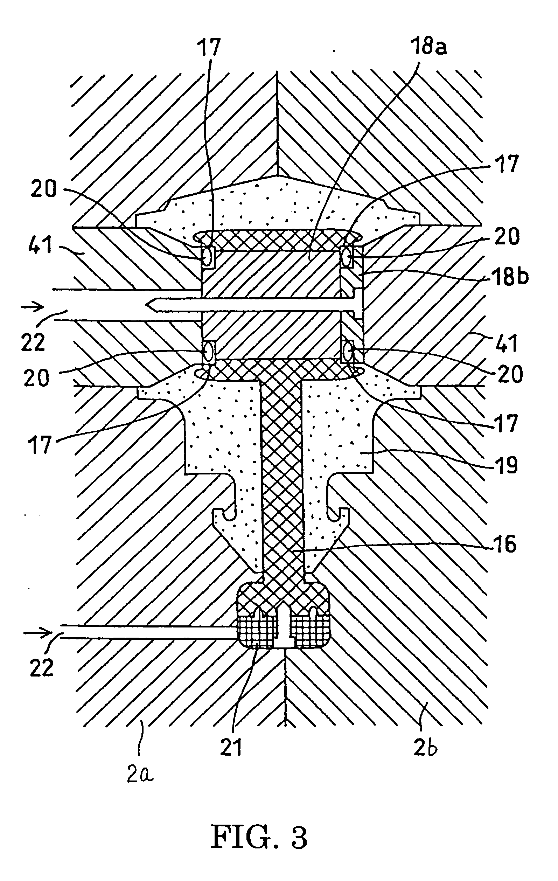

As shown in FIGs. 1 and 2, a metal conductor 16 composing the T-shaped bushing is set to each of the molding cavities 5a. An enlarged sectional view of the metal conductor 16 is shown in FIG. 3.

In FIG. 3, the metal conductor 16 has electrical contact points 17 connecting external cables. Pumped ring seals 20 are placed to the electrical contact points 17 in a way such that the contact points 17 are covered with the ring seals 20 in order to keep the epoxy resin 19 from intervening between the electrical contact points 17 and a first inner mold 18a or a second inner mold 18b.

A ring seal made of TEFLON (trade-mark of Du Pont) may be used instead of the pumped ring seal 20. In this case, the TEFLON ring seal prevents the epoxy resin 19 from intervening between the electrical contact points 17 and the inner molds 18a or 18b by a thermal expansion of the TEFLON ring seal and a clamping force of the opening and closing device.

As described above, the ring seals keep the epoxy resin from sticking to the electrical contact points 17, thereby preventing contact failure in the electrical contact points 17. Further, a necessary work to remove burrs (i.e. leakage of the epoxy resin) at a finishing step may be reduced.

With the reduction of the hardening process of the epoxy resin, handling works to release casting products from the molds 2a come to account for a lot of all processing steps. However, works needed for a finishing step and product deficiencies may be reduced by using the above sealing structure.

### (Releasing device)

Releasing device for releasing the casting product from the mold is explained referring to FIGs. 2 to 5.

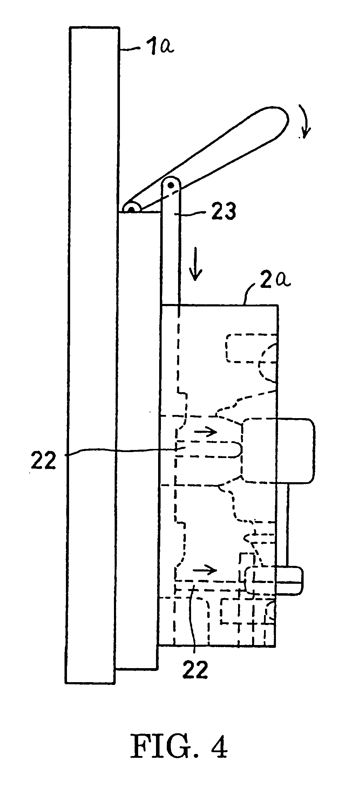

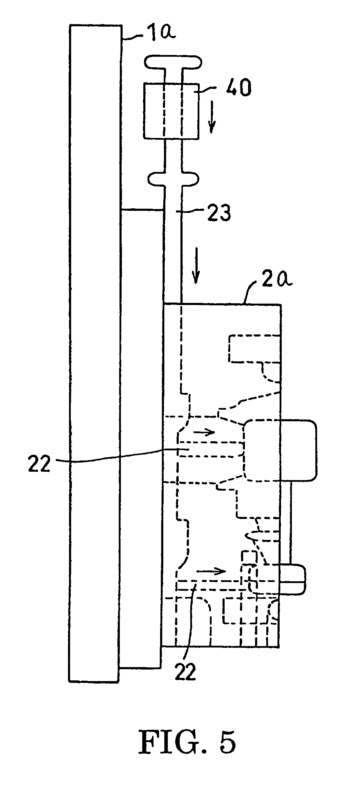

As shown in FIGs. 3 and 4, in a first embodiment of the releasing device, knock-pins (rods) 22 are disposed in the mold 2a, thereby pressing out the inner mold 18a supporting the metal conductor 16 and a base mold 21 fixed on the bottom of the metal conductor 16 by a pitch of 3-6mm with the same stroke. A releasing rod pushes out the knock-pins 22 by a lever, or by hitting the releasing rod with a hammer. For example, as shown in FIG. 4, the knock-pins 22 are pressed out to the right by pushing down a releasing rod 23. Or, as shown in FIG. 5, the releasing rod 23 is pressed down by a hammer action generated in a way of dropping a weight 40 coupled to the top of the releasing rod 23 after lifting the weight 40 up, thereby pushing out the knock-pins 22 to the right.

As shown in FIGs. 2 and 3, in a second embodiment of the releasing device, the knock-pins 22 operate together with the opening and closing device. That is, as shown in FIG. 2, as the molds 2a and 2b are moved with the hydraulic opening and closing device, knock-pins 22 hit against a stopper 24 disposed at the back of the heat plate 1a, thereby pushing out the inner mold 18a and the base mold 21 by a pitch of 3-6mm with the same stroke.

According to the first and second embodiments of the releasing device, casting products may be released in a short time without operating a force on a relatively soft portion of the casting product, that is, a portion of the epoxy resin.

Accordingly, product deficiencies that may happen at a time of releasing casting products may reduce by using the above releasing device. As a result, electrical property of the casting products is improved.

### (Positioning structure for a pair of molds)

A positioning structure for the pair of molds 2a and 2b is explained referring to FIGs. 2, 6 and 8.

As shown in FIG. 2, in a first embodiment of the positioning structure, the pair of molds 2a and 2b are respectively graduated on their side surfaces with lines 25, thereby determining a vertical relationship of the molds 2a and 2b.

Although it is generally hard to position a mold to a heat plate, the molds 2a and 2b are easily positioned in appropriate places according to the first embodiment of the positioning structure, thereby facilitating a replacement work of the molds 2a and 2b.

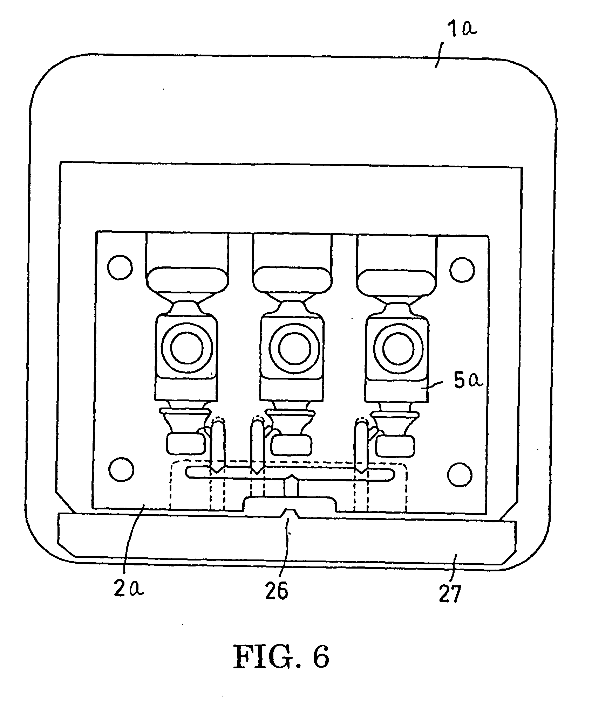

As shown in FIG. 6, in a second embodiment of the positioning structure, a positioner 27 having a tapered guide 26 is fixed on each of the heat plates 1a and 1b in order to locate the molds 2a and 2b in an appropriate place.

Although it is generally hard to position a mold to a heat plate, the molds 2a and 2b are easily positioned in an appropriate place according to the second embodiment of the positioning structure, thereby facilitating a replacement work of the molds 2a and 2b.

According to the first and second embodiments of the positioning structure, necessary steps for positioning the molds 2a and 2b may be reduced, thereby increasing productivity of the casting products.

### (A configuration of thin-walled portion of the casting product)

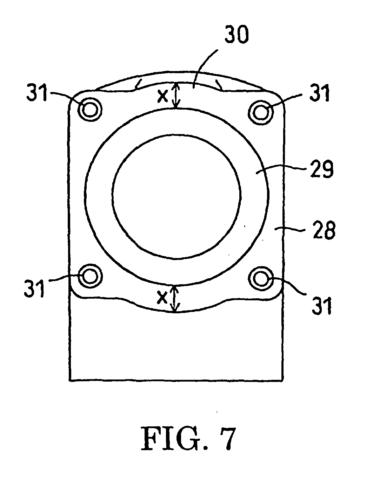

A configuration of thin-walled portion of the casting product such as the T-shaped bushing is explained referring to FIG. 7.

As shown in FIG. 7, two convex portions 30 are formed on the upper and lower sides of thin-walled portion of a flange 29 of the casting product 28 so that thick nesses X of the thin-walled portions of the flange 29 are 15 mm in thickness. That is, each of the molding cavities 5a and 5b has a supplement space located in a position corresponding to the thin-walled portions of the casting product 28 and supplied with the epoxy resin.

The reinforcement effect by the convex portions 30 of the casting product 28 prevents a deformation of the flange 29 caused by a contraction force generating in a direction of a large volume of the epoxy resin at hardening. Accordingly, casting products having a satisfactory dimensional precision can be obtained.

### (Fixing structure for an insert of a casting product)

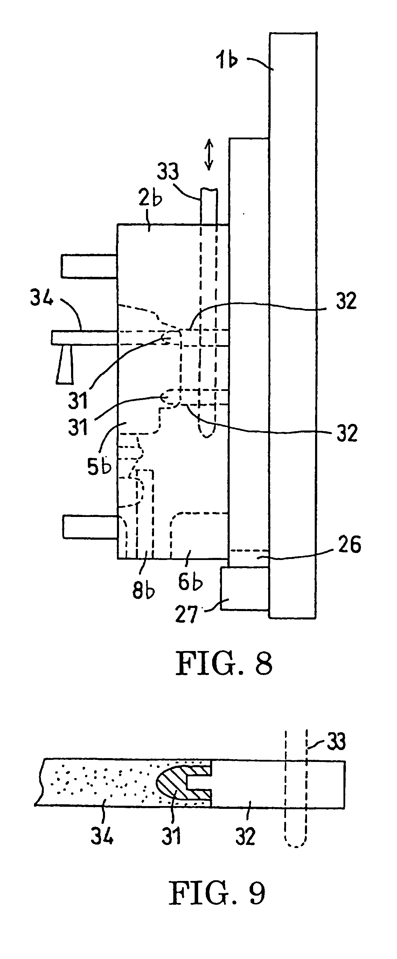

A fixing structure for an insert such as a female screw integrated in a casting product is explained referring to FIGs. 7 and 8.

As shown in FIG. 7, inserts 31 used for fixing the casting product 28 are integrated in the casting product 28. The inserts 31 are fixed on the mold 2b via magnet washers 32 attached to the mold 2b before molding. That is, after screwing the inserts 31 to the magnet washers 32, the magnet washers 32 are fixed on the bottom of the mold 2b magnetically. With the contraction of the epoxy resin at hardening, the magnet washers 32 are off the mold 2b.

In case of fixing the inserts 31 on the mold 2b, as shown in FIG. 8, a mechanical cylinder 33 may be used for fixing the magnet washers 32 on the mold 2b. After the epoxy resin gels while hardening, the mechanical cylinder 33 is removed.

Accordingly, the inserts 31 follow the contraction of the epoxy resin, thereby reducing a stress and preventing a separation of the epoxy resin and the inserts 31. Since an adhesive performance of the epoxy resin and the inserts 31 increases, mechanical and electrical property of the casting product 28 may be improved.

Further, each of the inserts 31 is fixed on the mold 2b by using a fixing rod 34 protecting surfaces of the insert 31.

FIG. 9 is a side view, partly in section, of the principle part of the fixing rod 34.

As shown in FIG. 9, the top of the fixing rod 34 is made of an elastic resin and has a concave for inserting the insert 31.

The fixing rod 34 prevents a mold release agent spread on the mold 2b from sticking to the inserts 31 at a time of fixing the inserts 31 on the mold 2b, thereby preventing a separation of the epoxy resin and the inserts 31 and increasing efficiency of work to fix the inserts 31.

Accordingly, since an adhesive performance of the epoxy resin and the inserts 31 increases, the casting product 28 having satisfactory mechanical and electrical properties may be obtained.

### (An inner mold for supporting a metal conductor)

An inner mold for supporting a metal conductor integrated in a casting product is explained referring to FIG. 3.

As shown in FIG. 3, an inner mold 41 is integrated with each of the molds 2a and 2b without joints.

Since the integrated inner molds 41 assist in heating up the conductor 16 by heat conduction from the heat plates 1a and 1b, the epoxy resin hardens around the conductor 16 first, whereby an adhesive performance of the epoxy resin and the conductor 16 increases. As a result, a partial discharge property of the casting product may be improved by prevention of a separation of the epoxy resin and the conductor 16.

### (Structure for leaving a casting product to a predetermined mold)

Structure for leaving a casting product to the mold 2a having the releasing device is described referring to FIG. 3.

The inner mold 18b forcibly secures the conductor 16 so as to always leave the casting product to the mold 2a having the releasing device at a time of separating the pair of molds 2a and 2b.

According to the above structure, since the casting product is surely left to the mold 2a having the releasing device, product deficiencies that happen at a time of releasing casting products may reduce.

### (Other embodiments)

In the above APG apparatus, the molds 2a and 2b are mounted on the heat plates 1a and 1b. However, the molds 2a and 2b may integrate heaters instead of the heat plates 1a and 1b, in case of producing casting products in large quantities and using the APG apparatus exclusively. In this case, temperature distributionof the molds 2a and 2b may be controlledaccurately. Especially, an adiabatic design for the forked pipe may be simplified.

Further, in the above description, temperature control for the forked pipe 50, a control for the second slit 12 and a control for the mechanical cylinder 33 are explained. It is required to execute these controls accurately according to a shape of the casting product. In such case, a dielectric measuring instrument that includes a dielectric sensor made of ceramic is disposed on either one of the molds 2a and 2b, thereby monitoring a hardening state of the epoxy resin and executing the above controls. Concerning the above control, since control timings may be adjusted by monitoring the hardening state of the epoxy resin existing in the second slit 12 and the forked pipe 50, the casting products may be produced with precision.

Although the above APG apparatus produces three T-shaped bushings simultaneously, different casting products from each other, for example, a bushing, an insulator and a rod for a circuit breaker may be produced simultaneously. In such case, a forked pipe and a degassing structure may be designed in the same way as the above described APG apparatus.

According to the APG apparatus of the present invention, a plurality of casting products having a satisfactory crack resistant property, satisfactory dimensional precision and a satisfactory partial discharge property may be produced simultaneously, thereby increasing the productivity of the casting products.

## Claims

1. An automatic pressure gelation (APG) apparatus for simultaneously producing three or more casting products (28) made of a thermosetting resin (19) by heating said thermosetting resin (19), comprising:
a molding assembly having a pair of molds (2a, 2b), at least one of said molds (2a, 2b) includes
three or more molding cavities (5a) respectively provided with back face heat plates (1a, 1b) and constituted to be capable of being opened and closed, injected with said thermosetting resin (19),
a forked path (50) arranged in said molding assembly for introduction of said thermosetting resin (19) from a lower part of said molding assembly into said molding cavities (5a), and
a cut configured to prevent heat from conducted to said forked path (50); and
a heat plate (1a, 1b) configured to heat and mount said molds (2a, 2b) wherein
said forked path (50) comprises:
a main path (3), and
a plurality of branch paths (7) from said main path (3) to each molding cavity (5a),
wherein said branch paths (7) are of equal length and **characterized in that** said forked path (50) is constructed such that its cross-section perpendicular to a depth direction of said forked path (50) is formed in a semi-circle on one side of said molding assembly.

2. The APG apparatus as recited in claim 1, wherein said cut prevents heat transmitted from said heat plate (1a, 1b) from conducted to said forked path (50).

3. The APG apparatus as recited in claim 1, wherein said cut comprises a groove, said groove being running a cooling material.

4. The APG apparatus as recited in claim 1, wherein each of said molding cavities (5a) comprises,
a first slit (10) disposed at the upper part thereof away from an inlet (4) for injecting said thermosetting resin (19), and forming a first gap of 0.1-1.0 mm between said pair of molds(2a, 2b), for directing an outflow of said thermosetting resin (19),
a trap (11) disposed at the upper part of said first slit (10) and configured to contain said outflow from said first slit (10), and
a second slit (12) disposed at the upper part of said trap(11) and forming a second gap of 20-100 µm between said pair of molds (2a, 2b), thereby assisting in degassing said thermosetting resin (19).

5. The APG apparatus as recited in claim 4, further comprising:
a heater disposed adjacent to said second slit (12) for preventing an outflow of said thermosetting resin (19) from said second slit (12).

6. The APG apparatus as recited in claim 4, further comprising:
a seal disposed adjacent to said second slit (12) for sealing said second gap to prevent an outflow of said thermosetting resin (19) from said second slit (12).

7. The APG apparatus as recited in claim 4, wherein any surfaces of each of said molding cavities (2a, 2b) contacting with said first slit (10) incline toward said first slit (10) at an angle of more than 10 degrees, thereby assisting in degassing said thermosetting resin (19).

8. The APG apparatus as recited in claim 4, wherein said trap has a volume of 4-8% of the volume of a casting product.

9. The APG apparatus as recited in claim 1, further comprising:
a rod (34) attached to one of said molds (2a, 2b) and moved with a lever for pressing said casting product (28) from the back side of said mold (2a, 2b), thereby releasing said casting product (28) from said mold (2a, 2b).

10. The APG apparatus as recited in claim 1, further comprising:
a rod (34) attached to one of said molds (2a, 2b) and moved with a hammer for pressing said casting product (28) from the back side of said mold (2a, 2b), thereby releasing said casting product (28) from said mold (2a, 2b).

11. The APG apparatus as recited in claim 1, further comprising:
a rod (34) attached to one of said molds (2a, 2b) and moved by an opening and closing device that operates to separate said molds (2a, 2b), for pressing said casting product (28) from the back side of said mold (2a, 2b), thereby releasing said casting product (28) from said molds (2a, 2b) as the same time as said molds (2a, 2b) are separated.

12. The APG apparatus as recited in claim 1, wherein said molds (2a, 2b) are respectively graduated on their surfaces in order to facilitate a positioning control for putting said pair of molds (2a, 2b) together.

13. The APG apparatus as recited in claim 1, further comprising:
a positioner having a tapered portion and fixed to said heat plate (1a, 1b) in order to locate said pair of molds (2a, 2b) in place.

14. The APG apparatus as recited in claim 1, wherein each of said molding cavities (5a) includes a supplement space located in a position corresponding to a thin-walled portion of said casting product (28) and supplied with said thermosetting resin (19) in order to prevent a dimensional deviation caused by a fast contraction of said thermosetting resin (19).

15. The APG apparatus as recited in claim 1, further comprising:
a magnet washer (32) attached to one of said molds (2a, 2b) magnetically in order to support an insert to be integrated into said casting product (28).

16. The APG apparatus as recited in claim 1, further comprising:
a mechanical cylinder (33) disposed on the side of one of said molds (2a, 2b) for supporting an insert to be integrated into said casting product (28), said mechanical cylinder (33) is removed in response to the hardening state of said thermosetting resin (19) at molding.

17. The APG apparatus as recited in claim 1, further comprising:
an inner mold (18a, 18b), integrated with one of said molds (2a, 2b), for supporting a metal conductor (16) to be integrated into said casting product (28).

18. The APG apparatus as recited in claim 1, further comprising:
an inner mold (18a, 18b) fixing said casting product (28) so that said casting product(28) is left to one of said molds (2a, 2b) having a releasing device for releasing said casting product (28) from said mold (2a, 2b) when said pair of molds (2a, 2b) are separated.

19. The APG apparatus as recited in Claim 1, wherein said thermosetting resin (19) possesses a glass-transition temperature of 100 degrees C or higher.

## Patentansprüche

1. Automatische Druckgeliervorrichtung (APG) zum gleichzeitigen Herstellen von drei oder mehr Gussprodukten (28) aus einem Duroplast (19) durch Heizen des Duroplasts (19), mit:
einer Formanordnung mit einem Paar an Formen (2a, 2b), wobei mindestens eine der Formen (2a, 2b) aufweist:
drei oder mehr Formhohlräume (5a), die jeweils mit rückseitigen Heizplatten (1a, 1b) versehen sind und derart ausgebildet sind, dass sie in der Lage sind, geöffnet und geschlossen zu werden, und in die der Duroplast (19) eingespritzt wird,
einen gegabelten Pfad (50), der in der Formanordnung angeordnet ist, zum Einführen des Duroplasts (19) von einem unteren Teil der Formanordnung in die Formhohlräume (5a), und
einem Schnitt, der dazu ausgebildet ist, zu verhindern, dass Hitze zu dem gegabelten Pfad (50) geleitet wird; und
einer Heizplatte (1a, 1b), die zum Heizen und Befestigen der Formen (2a, 2b) ausgebildet ist, wobei
der gegabelte Pfad (50) aufweist:
einen Hauptpfad (3), und
eine Vielzahl an Zweigpfaden (7) von dem Hauptpfad (3) zu jedem Formhohlraum (5a),
wobei die Zweigpfade (7) mit gleicher Länge ausgebildet sind, und **dadurch gekennzeichnet, dass**
der gegabelte Pfad (50) so aufgebaut ist, dass sein Querschnitt senkrecht zu einer Tiefenrichtung des gegabelten Pfads (50) in einem Halbkreis an einer Seite der Formanordnung ausgebildet ist.

2. APG-Vorrichtung nach Anspruch 1, bei der der Schnitt verhindert, dass Hitze von der Heizplatte (1a, 1b) zu dem gegabelten Pfad (50) übertragen wird.

3. APG-Vorrichtung nach Anspruch 1, bei der der Querschnitt eine Vertiefung aufweist, wobei die Vertiefung von einem Kühlmaterial durchlaufen wird.

4. APG-Vorrichtung nach Anspruch 1, bei der jeder der Formhohlräume (5a) aufweist:
einen ersten Schlitz (10), der an einem oberen Teil desselben und getrennt von einem Einlass (4) zum Einspritzen des Duroplasts (19) angeordnet ist und eine erste Lücke von 0.1-1.0 mm zwischen dem Paar an Formen (2a, 2b) bildet, zum Führen eines Abflusses des Duroplasts (19),
eine Falle (11), die an dem oberen Teil des ersten Schlitzes (10) angeordnet ist und zum Auffangen des Abflusses des ersten Schlitzes (10) ausgebildet ist, und
einen zweiten Schlitz (12), der an dem oberen Teil der Falle (11) angeordnet ist und eine zweite Lücke von 20-100 µm zwischen dem Paar an Formen (2a, 2b) bildet, und dabei eine Entgasung des Duroplasts (19) unterstützt.

5. APG-Vorrichtung nach Anspruch 4, die ferner aufweist:
eine Heizeinrichtung, die benachbart zu dem zweiten Schlitz (12) angeordnet ist, zum Verhindern eines Abflusses des Duroplasts (19) aus dem zweiten Schlitz (12).

6. APG-Vorrichtung nach Anspruch 4, die ferner aufweist:
eine Dichtung, die benachbart zu dem zweiten Schlitz (12) zum Abdichten der zweiten Lücke angeordnet ist, zum Verhindern eines Abflusses des Duroplasts (19) aus dem zweiten Schlitz (12).

7. APG-Vorrichtung nach Anspruch 4, bei der jegliche Oberflächen von jedem der Formhohlräume (2a, 2b), die mit dem ersten Schlitz (10) in Kontakt stehen, sich in Richtung zum ersten Schlitz (10) in einem Winkel von mehr als 10 Grad neigen, und dabei eine Entgasung des Duroplasts (19) unterstützen.

8. APG-Vorrichtung nach Anspruch 4, bei der die Falle ein Volumen von 4-8 % des Volumens eines Gussprodukts aufweist.

9. APG-Vorrichtung nach Anspruch 1, die ferner aufweist:
eine Stange (34), die an einer der Formen (2a, 2b) befestigt ist und mit einem Hebel zum Drücken des Gussprodukts (28) von der Rückseite der Form (2a, 2b) her bewegt wird, und dabei das Gussprodukt (28) von der Form (2a, 2b) freigibt.

10. APG-Vorrichtung nach Anspruch 1, die ferner aufweist:
eine Stange (34), die an einer der Formen (2a, 2b) befestigt ist und mit einem Hammer zum Drücken des Gussprodukts (28) von der Rückseite der Form (2a, 2b) her bewegt wird, und dabei das Gussprodukt (28) von der Form (2a, 2b) freigibt.

11. APG-Vorrichtung nach Anspruch 1, die ferner aufweist:
eine Stange (34), die an einer der Formen (2a, 2b) befestigt ist und durch eine Öffnungs- und Schließeinrichtung, die zum Trennen der Formen (2a, 2b) betätigt wird, zum Drücken des Gussprodukts (28) von der Rückseite der Form (2a, 2b) her bewegt wird, und dabei das Gussprodukt (28) von den Formen (2a, 2b) zu der gleichen Zeit freigibt, zu der die Formen (2a, 2b) getrennt werden.

12. APG-Vorrichtung nach Anspruch 1, bei der die Formen (2a, 2b) an ihrer Oberfläche jeweils graduiert ausgebildet sind, um eine Positionssteuerung zum Zusammenführen des Paares an Formen (2a, 2b) zu unterstützen.

13. APG-Vorrichtung nach Anspruch 1, die ferner aufweist:
eine Positioniereinrichtung mit einem verjüngten Abschnitt, die an der Heizplatte (1a, 1b) befestigt ist, um das Paar an Formen (2a, 2b) an Stelle anzuordnen.

14. APG-Vorrichtung nach Anspruch 1, bei der jeder der Formhohlräume (5a) einen Zusatzraum aufweist, der in einer Position, die zu einem dünnwandigen Abschnitt des Gussprodukts (28) korrespondiert, angeordnet ist, und mit dem Duroplast (19) zugeführt wird, um eine dimensionale Abweichung, die durch eine schnelle Kontraktion des Duroplasts (19) verursacht wird, zu verhindern.

15. APG-Vorrichtung nach Anspruch 1, die ferner aufweist:
einen Magnetring (32), der an einer der Formen (2a, 2b) magnetisch befestigt ist, um einen in das Gussprodukt (28) zu integrierenden Einsatz zu stützen.

16. APG-Vorrichtung nach Anspruch 1, die ferner aufweist:
einen an der Seite einer der Formen (2a, 2b) angeordneten mechanischen Zylinder (33) zum Stützen eines in das Gussprodukt (28) zu integrierenden Einsatzes, wobei der mechanische Zylinder (33) in Abhängigkeit des Aushärtungszustands des Duroplasts (19) beim Formen entfernt wird.

17. APG-Vorrichtung nach Anspruch 1, die ferner aufweist:
eine innere Form (18a, 18b), die in einer der Formen (2a, 2b) integriert ist, zum Stützen eines in dem Gussprodukt (28) zu integrierenden Metallleiters (16).

18. APG-Vorrichtung nach Anspruch 1, die ferner aufweist:
eine innere Form (18a, 18b), die das Gussprodukt (28) befestigt, so dass das Gussprodukt (28) bei einer der Formen (2a, 2b), die eine Löseeinrichtung zum Lösen des Gussprodukts (28) von der Form (2a, 2b), wenn das Paar an Formen (2a, 2b) getrennt wird, aufweist, belassen wird.

19. APG-Vorrichtung nach Anspruch 1, bei der der Duroplast (19) eine Glasübergangstemperatur von 100° C oder höher aufweist.

## Revendications

1. Dispositif de gélification sous pression automatique (GPA) pour produire simultanément trois produits coulés ou plus (28) faits d'une résine thermodurcissable (19), par chauffage de ladite résine thermodurcissable (19), comprenant :
un ensemble de moulage comportant deux moules (2a, 2b), au moins l'un desdits moules (2a, 2b) comportant
au moins trois cavités de moulage (5a) respectivement munies de plaques de chauffage de face arrière (1a, 1b) et constituées de manière à pouvoir être ouvertes et fermées, dans lesquelles est injectée ladite résine thermodurcissable (19),
un chemin en forme de fourche (50) agencé dans ledit ensemble de moulage pour l'introduction de ladite résine thermodurcissable (19) depuis une partie inférieure dudit ensemble de moulage dans lesdites cavités de moulage (5a), et
une découpe configurée pour empêcher la chaleur d'être conduite vers ledit chemin en forme de fourche (50) ; et
une plaque chauffante (1a, 1b) configurée pour chauffer et monter lesdits moules (2a, 2b) dans lequel
ledit chemin en forme de fourche (50) comprend :
un chemin principal (3), et
une pluralité de chemins dérivés (7) depuis ledit chemin principal (3) vers chaque cavité de moulage (5a),
dans lequel lesdits chemins dérivés (7) sont de longueur égale et **caractérisé en ce que** ledit chemin en forme de fourche (50) est construit de telle sorte que sa section perpendiculaire au sens de la largeur dudit chemin en forme de fourche (50) est en forme de demi-cercle sur une face dudit ensemble de moulage.

2. Dispositif de GPA selon la revendication 1, dans lequel ladite découpe empêche la chaleur transmise par ladite plaque chauffante (1a, 1b) d'être conduite vers ledit chemin en forme de fourche (50).

3. Dispositif de GPA selon la revendication 1, dans lequel ladite découpe comprend une gorge, ladite gorge acheminant un matériau de refroidissement.

4. Dispositif de GPA selon la revendication 1, dans lequel chacune desdites cavités de moulage (5a) comprend,
une première fente (10) disposée dans sa partie supérieure éloignée de l'entrée (4) pour injecter ladite résine thermodurcissable (19) et formant un premier espace compris entre 0,1 mm et 1,0 mm entre lesdits deux moules (2a, 2b), pour diriger l'écoulement de sortie de ladite résine thermodurcissable (19),
un piège (11) disposé dans la partie supérieure de ladite première fente (10) et configuré pour contenir ledit écoulement de sortie de ladite première fente (10), et
une seconde fente (12) disposée dans la partie supérieure dudit piège (11) et formant un second espace compris entre 20 µm et 100 µm entre lesdits deux moules (2a, 2b) de façon à faciliter le dégazage de ladite résine thermodurcissable (19).

5. Dispositif de GPA selon la revendication 4, comprenant en outre :
un dispositif de chauffage disposé de manière adjacente à ladite seconde fente (12) pour empêcher un écoulement de sortie de ladite résine thermodurcissable (19) depuis ladite seconde fente (12).

6. Dispositif de GPA selon la revendication 4, comprenant en outre :
un joint disposé de manière adjacente à ladite seconde fente (12) pour fermer hermétiquement ledit second espace pour empêcher un écoulement de sortie de ladite résine thermodurcissable (19) de ladite seconde fente (12).

7. Dispositif de GPA selon la revendication 4, dans lequel des surfaces quelconques de chacune desdites cavités de moulage (2a, 2b) en contact avec ladite première fente (10) s'inclinent vers ladite première fente (10) d'un angle de plus de 10 degrés, de façon à faciliter le dégazage de ladite résine thermodurcissable (19).

8. Dispositif de GPA selon la revendication 4, dans lequel ledit piège possède un volume de 4 % à 8 % du volume d'un produit de coulage.

9. Dispositif de GPA selon la revendication 1, comprenant en outre :
une tige (34) fixée à l'un desdits moules (2a, 2b) et déplacée avec un levier pour presser ledit produit de coulage (28) depuis la face arrière dudit moule (2a, 2b), de façon à libérer ledit produit de coulage (28) dudit moule (2a, 2b).

10. Dispositif de GPA selon la revendication 1, comprenant en outre :
une tige (34) fixée à l'un desdits moules (2a, 2b) et déplacée avec un marteau pour presser ledit produit de coulage (28) depuis la face arrière dudit moule (2a, 2b), de façon à libérer ledit produit de coulage (28) dudit moule (2a, 2b).

11. Dispositif de GPA selon la revendication 1, comprenant en outre :
une tige (34) fixée à l'un desdits moules (2a, 2b) et déplacée par un dispositif d'ouverture et de fermeture agissant de manière à séparer lesdits moules (2a, 2b), pour presser ledit produit de coulage (28) depuis la face arrière dudit moule (2a, 2b), de façon à libérer ledit produit de coulage (28) desdits moules (2a, 2b) en même temps que lesdits moules (2a, 2b) sont séparés.

12. Dispositif de GPA selon la revendication 1, dans lequel lesdits moules (2a, 2b) sont respectivement gradués sur leurs surfaces afin de faciliter le contrôle de positionnement pour assembler lesdits deux moules (2a, 2b).

13. Dispositif de GPA selon la revendication 1, comprenant en outre :
un dispositif de positionnement comportant une partie effilée et fixé à ladite plaque chauffante (1a, 1b) pour mettre en place lesdits deux moules (2a, 2b).

14. Dispositif de GPA selon la revendication 1, dans lequel chacune desdites cavités de moulage (5a) comporte un espace complémentaire situé dans une position correspondant à une partie de paroi mince dudit produit de coulage (28) et alimenté par ladite résine thermodurcissable (19) afin d'empêcher une déformation de dimension produite par une contraction rapide de ladite résine thermodurcissable (19).

15. Dispositif de GPA selon la revendication 1, comprenant en outre :
un dispositif de lavage à aimant (32) fixé de façon magnétique à l'un desdits moules (2a, 2b) pour supporter une pièce d'insertion destinée à être intégrée dans ledit produit de coulage (28).

16. Dispositif de GPA selon la revendication 1, comprenant en outre :
un cylindre mécanique (33) disposé sur le côté de l'un desdits moules (2a, 2b) pour supporter une pièce d'insertion destinée à être intégrée dans ledit produit de coulage (28), ledit cylindre mécanique (33) étant levé en réponse à l'état de durcissement de ladite résine thermodurcissable (19) au moment du moulage.

17. Dispositif de GPA selon la revendication 1, comprenant en outre :
un moule interne (18a, 18b), intégré avec l'un desdits moules (2a, 2b), pour supporter un conducteur métallique (16) destiné à être intégré dans ledit produit de coulage (28).

18. Dispositif de GPA selon la revendication 1, comprenant en outre :
un moule interne (18a, 18b) fixant ledit produit de coulage (28) de telle sorte que ledit produit de coulage (28) soit laissé dans l'un desdits moules (2a, 2b) comportant un dispositif de libération pour libérer ledit produit de coulage (28) dudit moule (2a, 2b) lorsque lesdits deux moules (2a, 2b) sont séparés.

19. Dispositif de GPA selon la revendication 1, dans lequel ladite résine thermodurcissable (19) possède une température de transition vitreuse supérieure ou égale à 100 degré C.
